# EUROPÄISCHE PATENTSCHRIFT

(11) **EP 2 175 954 B1**
(45) Veröffentlichungstag und Bekanntmachung des Hinweises auf die Patenterteilung: **14.09.2011**
(21) Anmeldenummer: 08785040.0
(22) Anmeldetag: 24.07.2008
(51) Int. Cl.: B01D 29/11

(54) **FILTEREINRICHTUNG FÜR FLUIDE, INSBESONDERE HYDRAULIKFLÜSSIGKEITEN, SCHMIERÖLE UND KRAFTSTOFFE**
FILTER DEVICE FOR FLUIDS, PARTICULARLY HYDRAULIC FLUIDS, LUBRICATING OILS, AND FUELS
SYSTÈME DE FILTRATION DE FLUIDES, EN PARTICULIER DE LIQUIDES HYDRAULIQUES, D'HUILES DE GRAISSAGE ET DE CARBURANTS

(30) Priorität: 08.08.2007 DE 102007037462
(43) Veröffentlichungstag der Anmeldung: 21.04.2010
(73) Patentinhaber: Hydac Filtertechnik Gmbh, 66273 Sulzbach/Saar (DE)
(72) Erfinder: LAUER, Viktor, Josef, 66809 Nalbach (DE); KLEEMANN, Daniel, 66125 Saarbrücken (DE)
(74) Vertreter: Bartels, Martin Erich Arthur
(86) Internationale Anmeldenummer: PCT/EP2008/006087
(87) Internationale Veröffentlichungsnummer: WO 2009/018926

(56) Entgegenhaltungen:
- EP-A- 1 702 661
- DE-C1- 4 336 262
- DE-U1- 9 306 688
- US-A1- 2003 132 153

## Beschreibung

Die Erfindung betrifft eine Filtereinrichtung für Fluide, insbesondere Hydraulikflüssigkeiten, Schmieröle und Kraftstoffe, mit mindestens einem einen Zuströmbereich für abzureinigendes Fluid aufweisenden Filterelement, und mit einem am Filterelement anbringbaren, den Zuströmbereich überdeckenden, eine Fangeinrichtung für organische Substanzen wie Fettpartikel und/oder unvollständig gelöste organische Substanzen bildenden Vorsatzelement, wobei das Filterelement ein eine Längsachse definierender Körper ist, dessen die Längsachse umgebende Außenfläche den Zuströmbereich bildet, und wobei das Vorsatzelement die Form eines diese Außenfläche bedeckenden Fangmantel besitzt.

Eine derartige Filtereinrichtung ist aus US 2003/0132153 A1 bekannt geworden. Bei der bekannten Filtereinrichtung ist das Vorsatzelement durch eine Manschette gebildet, die über bzw. um das Filterelement gelegt wird und die Wirksamkeit der gesamten Filtereinrichtung erhöht. Die Manschette kann als ein Rohrstück gefertigt sein oder über ein Klettverschlusssystem aneinander befestigt sein. Zweckmäßigerweise wird das manschettenförmige Vorsatzelement über einen festen Streifen aus Plastik oder Metall, der sich entlang der gesamten axialen Länge des Zylinders erstreckt, unter Vorspannung am Filterelement gehalten.

Sowohl im Hinblick auf Betriebssicherheit als auch aus wirtschaftlichen Gründen wird beim Betrieb maschineller Anlagen verschiedener Arten, insbesondere bei höherwertigen Anlagen, eine regelmäßige Erfassung des Maschinenzustandes durchgeführt, um eine "zustandsorientierte Instandhaltung" durchzuführen. Dieses Konzept löst die bisher übliche "präventive" Instandhaltung ab, bei welcher in festen Zeitabständen die betreffende Maschine heruntergefahren und Bauteile überprüft oder ausgetauscht wurden. Diese Art der Maschinenwartung führte häufig dazu, dass intakte Bauteile ausgetauscht und vorhandene "Restlaufzeiten" somit verschenkt wurden.

Um diese Nachteile zu vermeiden, wird eine laufende Zustandsüberwachung (condition monitoring) durchgeführt. Dabei ist es Stand der Technik, eine Momentaufnahme des Zustandes des Öles in einem System durchzuführen, wobei die Ölreinheit kennzeichnende Sensordaten in Echtzeit analysiert werden, um einen gegebenenfalls vorhandenen Störfaktor zu ermitteln. Zur Überwachung der Ölreinheit werden optische Sensoren in Form von Partikelzählern benutzt, die im betreffenden Fluid Partikel oder unvollständig gelöste organische Substanzen, z.B. Ölalterungsstoffe, aufgrund von deren Phasengrenze erkennen und die Anzahl der Partikel und die Größenverteilung in regelmäßigen Zeitabständen wiedergeben. Allerdings ermöglichen derartige Sensoren keine Unterscheidung der Partikelart und ermöglichen daher keine Aussage darüber, welche Art von festen Stoffen oder unvollständig gelöster Substanzen vorliegt.

In den Montageabteilungen von Industriebetrieben werden viele Bauteile vor dem oder beim Zusammenbau mit Fetten eingeschmiert. Diese können beim Zusammenbau mechanischer oder hydraulischer Komponenten als Montagehilfspaste dienen oder können beispielsweise bei Hydropumpen und Hydromotoren, die auf Prüfständen eingefahren werden, oder bei mechanischen Getrieben, insbesondere Planetengetrieben von Windkraftanlagen, als Notschmierstoff bei Anfahrvorgängen dienen oder auch die Einfahrschmiereigenschaften des betreffenden Schmieröles verbessern. Diese Fette gelangen jedoch nach Einbau und Inbetriebnahme der betreffenden Einrichtungen in den Ölkreislauf und liegen dann als fein dispergierte Fettpartikel vor. Diese Fettpartikel sind zwar nicht schädlich hinsichtlich der Betriebs- oder Schmiereigenschaften des betreffenden Öles, sie werden jedoch ebenso wie andersartige Feststoffverschmutzung von den optischen Sensoren erkannt und als Feststoffverschmutzung mitgezählt. Faktisch tritt so eine Verfälschung bei Ölreinheitsmessungen auf, was dazu führt, dass das Öl nominell in eine Reinheitsklasse (ISO 4406) eingereiht wird, die nicht mehr der betreffenden Spezifikation entspricht, so dass ohne Not Gegenmaßnahmen ergriffen werden, beispielsweise im System befindliche Filterelemente ausgewechselt werden. Ähnlich störende Wirkung auf die Ölreinheitsmessung haben festkörperhaltige Schmierstoffe und organische Montagehilfsstoffe, wie Gleitpasten, Korrosions-Schutzmittel, Klebstoffe und Dichtmittel. Eine weitere Problemgruppe stellen Ölalterungsprodukte dar, welche unter Extrembelastung des Schmieröles in Getrieben hoher Leistung, z.B. in Windkraftanlagen, entstehen. Unter besonderen Bedingungen entstehen aus ursprünglich gelöst vorliegenden Additiven kolloidale Alterungsprodukte. Diese Substanzen sind zwar nicht schädlich hinsichtlich der Betriebs- oder Schmiereigenschaften des betreffenden Fluids, sie werden jedoch ebenso wie andersartige Feststoffverschmutzung mitgezählt. Hierdurch tritt ebenfalls eine Verfälschung der Ölreinheitsmessung auf.

Im Hinblick auf diese Problematik liegt der Erfindung die Aufgabe zugrunde, eine Filtereinrichtung zur Verfügung zu stellen, die in Verbindung mit Systemen, bei denen eine Überwachung des Ölzustandes stattfindet, die Gefahr der fehlerhaften Zustandsbeurteilung vermeidet, wobei neben guten Strömungseigenschaften eine einfache und sichere Fixierung des Vorsatzelements am Filterelement gewährleistet sein soll.

Erfindungsgemäß ist diese Aufgabe durch eine Filtereinrichtung gelöst, die die Merkmale des Patentanspruches 1 in seiner Gesamtheit aufweist.

Danach besteht die wesentliche Besonderheit der Erfindung darin, dass am Filterelement an seinen in Längsrichtung zueinander entgegengesetzten Enden je ein die Enden des Zuströmbereiches bildendes Deckelelement vorgesehen ist, dass mindestens eine Festlegevorrichtung vorgesehen ist, um einen betreffenden Endrand des Fangmantels am betreffenden Deckelement festzulegen, und dass die mindestens eine Festlegevorrichtung als am betreffenden Deckelelement festklemmbarer Ringkörper ausgebildet ist. Vorteilhafte Ausgestaltungen der erfindungsgemäßen Filtereinrichtung sind Gegenstände der Unteransprüche.

Dadurch, dass dem Zuströmbereich des Filterelementes ein Vorsatzelement vorgeschaltet ist, ist eine Fangeinrichtung für derartige Partikel gebildet, die zu einer fehlerhaften Beurteilung des Fluidzustandes führen könnten, falls diese Partikel von einem stromabwärts des Filterelementes positionierten Partikelzähler mitgezählt würden. Damit ist sichergestellt, dass das jeweils ermittelte Zählergebnis des Partikelzählers die sachgerechte Beurteilung des Ölzustandes ermöglicht.

Bei Einrichtungen, bei denen das Filterelement in der allgemein üblichen Art ein eine Längsachse definierender Körper ist, dessen die Längsachse umgebende Außenfläche den Zuströmbereich bildet, ist die Anordnung so getroffen, dass das Vorsatzelement die Form einer diese Außenfläche bedeckenden Fangeinrichtung für derartige Partikel besitzt. Diese mantelförmige Fangeinrichtung kann nach Bedarf, d. h. nachdem er die von Systemteilen abgelösten, im Ölkreislauf als fein dispers verteilte Partikel vorliegenden Bestandteile aufgenommen hat, abgenommen und gegebenenfalls gegen einen neuen Mantel ausgetauscht werden, ohne das Filterelement selbst ausbauen oder auswechseln zu müssen.

Ein solcher Vorgang gestaltet sich besonders schnell und einfach, wenn der Mantel aus einer Filtermaterialbahn gebildet ist, deren einander entgegengesetzte Enden zur Bildung der Mantelform zusammenbringbar und über einen längsverlaufenden Mantelverschluß miteinander verbindbar sind. Ein solcher Mantel kann nach Öffnen des Verschlusses besonders einfach abgenommen werden. Ebenso leicht und bequem gestaltet sich das Anbringen am Filterelement, indem die Filtermaterialbahn um das Filterelement herum gelegt, d. h. insbesondere in die Form eines Hohlzylinders gebracht wird, und an die in dem entsprechenden Fall kreiszylindrische Außenfläche des Filterelementes angelegt wird, bevor der Mantelverschluß geschlossen wird.

Bei besonders vorteilhaften Ausführungsbeispielen kann der Verschluß durch eine Haftverbindung gebildet sein.

Eine Filtermattenbahn aus einem Vlies grober Porenstruktur hat sich für die Bildung der Fangeinrichtung als besonders geeignet erwiesen.

Bei vorteilhaften Ausführungsbeispielen handelt es sich hierbei um ein Vlies aus lipophilem Material, insbesondere aus Fasern aus Polyolefin oder aus Polyester mit Co-Polyester. Vliese aus andersartigen unpolaren organischen Stoffen sind ebenfalls anwendbar.

Bei besonders vorteilhaften Ausführungsbeispielen ist die Anordnung hierbei so getroffen, dass die aus dem Vlies gebildete Filtermaterialbahn eine vernetzte, voluminöse Faserstruktur mit gröberer Filterfeinheit als das nachgeschaltete Filterelement oder die nachgeschaltete Filterlage besitzt.

Nachstehend ist die Erfindung anhand der Zeichnung im Einzelnen erläutert. Es zeigen:
- Fig. 1 eine perspektivische Teilseitenansicht eines Ausführungsbeispieles der erfindungsgemäßen Filtereinrichtung, wobei eine an einem Filterelement befindliche Fangeinrichtung in teilweise geöffnetem Zustand dargestellt ist;
- Fig. 2 eine schematische Darstellung der Abscheidevorgänge an einem Filterelement, das von einem mit organischen Substanzen und Ölalterungsprodukten belasteten Fluid durchströmt ist;
- Fig. 3 eine der in Fig. 2 ähnliche schematische Darstellung, in der zur Erläuterung der Funktionsweise der Erfindung Abscheidevorgänge bei Benutzung eines dem Filterelement vorgeschalteten Vlieses dargestellt sind;
- Fig. 4 eine annähernd in natürlichem Maßstab gezeichnete perspektivische Schrägansicht eines Ausführungsbeispieles der erfindungsgemäßen Filtereinrichtung;
- Fig. 5 eine der Fig. 4 ähnliche Schrägansicht, in der lediglich der Mantel mit von diesem abgenommenen Festlegeteilen dargestellt ist;
- Fig. 6 eine gegenüber Fig. 5 leicht vergrößert gezeichnete perspektivische Schrägansicht lediglich eines der dort gezeigten Festlegeelemente;
- Fig. 7 eine gegenüber Fig. 6 stark vergrößerte Teildarstellung lediglich des in Fig. 6 mit VII bezeichneten Bereiches;
- Fig. 8 eine der Fig. 6 ähnliche Darstellung eines Festlegeelementes abgewandelter Bauweise und
- Fig. 9 eine gegenüber Fig. 8 stark vergrößert gezeichnete Teildarstellung lediglich des in Fig. 8 mit IX bezeichneten Bereiches.

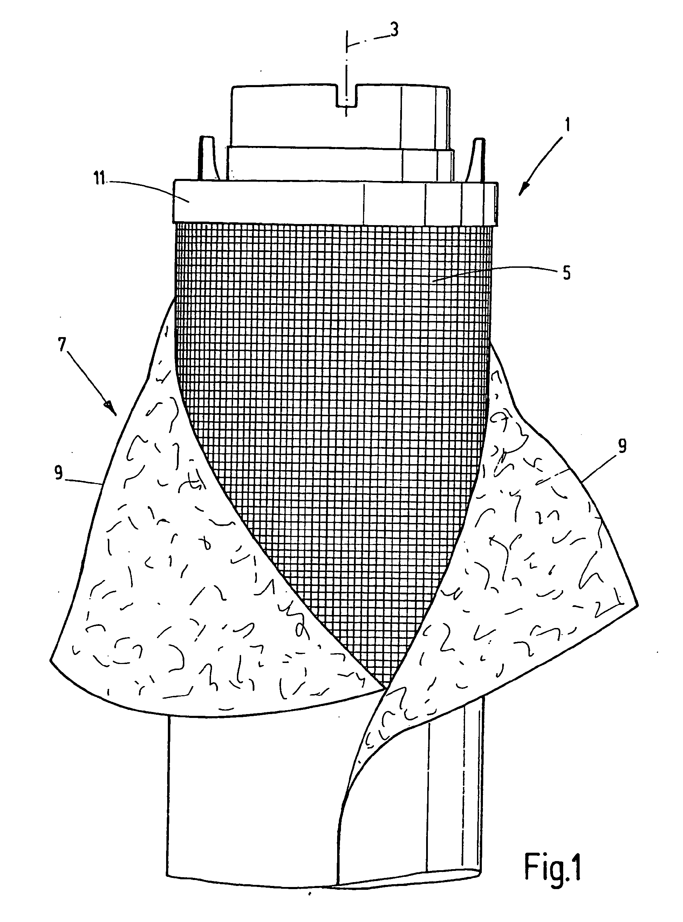

In Fig. 1 ist ein Filterelement als Ganzes mit 1 bezeichnet, das beim vorliegenden Beispiel als im großen Ganzen kreiszylindrischer Körper gestaltet ist, der eine Längsachse 3 definiert. Bei dem Filterelement 1 handelt es sich um ein von außen her zu einem inneren Filterhohlraum hin durchströmbares Filter, das ein zur Achse 3 konzentrisches inneres Stützrohr aufweist, das den inneren Filterhohlraum umgibt, mit Fluiddurchlässen versehen ist und als Träger für eine das Stützrohr umgebende Filtermatte dient. Diese ist zick-zack-förmig oder plissiert aus einer Mehrzahl aneinanderliegender Filterbahnen gestaltet, wobei, von innen nach außen hin, ein Metallgewebe oder Kunststoffgitter/-gewebe oder ein Edelstahl-Polyester-Mischgewebe, ein darüberliegendes Papiervlies oder Polyestervlies, eine darüber befindliche Glasfasermatte oder ein melt-blown Vlies, eine weitere derartige Matte und ein darüberliegendes Polyestervlies den Schichtaufbau dieser Filtermatte bilden können. Fig. 1 zeigt, dass über dieser Filtermatte ein äußerer perforierter Stützkörper, beim vorliegenden Beispiel eine bedruckte Außenhülse aus Kunststoff, vorhanden ist. Diese Außenhülse 5 bildet den Zuströmbereich des Filterelements, also diejenige Außenfläche des Filterelementes 1 über die der Eintritt des abzureinigenden Fluides erfolgt.

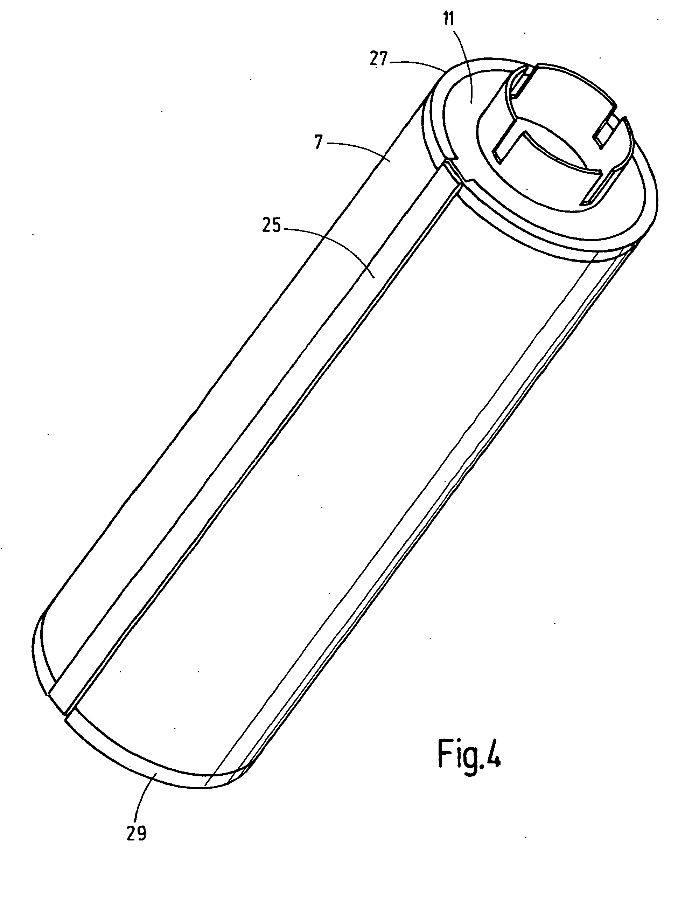

Fig. 1 zeigt, dass um die den Zuströmbereich bildende Außenhülse 5 ein als Ganzes mit 7 bezeichnetes Zusatzvlies teilweise herumgelegt ist. Wenn das Zusatzvlies 7 vollständig um die Außenhülse 5 herumgelegt und der Mantel 7 geschlossen ist, ist der in Fig. 1 obere Endrand 9 am oberen Deckelteil 11 des Filterelementes 1 festgelegt. Entsprechendes gilt für den in Fig. 1 nicht sichtbaren unteren Endrand des Mantels 7, der an dem in Fig. 1 nicht sichtbaren unteren Deckelteil des Filterelementes 1 festgelegt ist. Auf die diesbezüglichen näheren Einzelheiten wird unten unter Bezugnahme auf die Fig. 4 bis 9 näher eingegangen.

Der Mantel 7 ist aus einer Filtermaterialbahn aus einem Vlies grober Porenstruktur gebildet, vorzugsweise aus einem lipophilen Material, beispielsweise aus Fasern aus Polyolefin oder aus Polyester mit Co-Polyester oder anderen unpolaren organischen Materialen, wobei eine vernetzte, voluminöse Faserstruktur gebildet ist, deren Feinheit gröber als diejenige des nachgeschalteten Filterelementes ist.

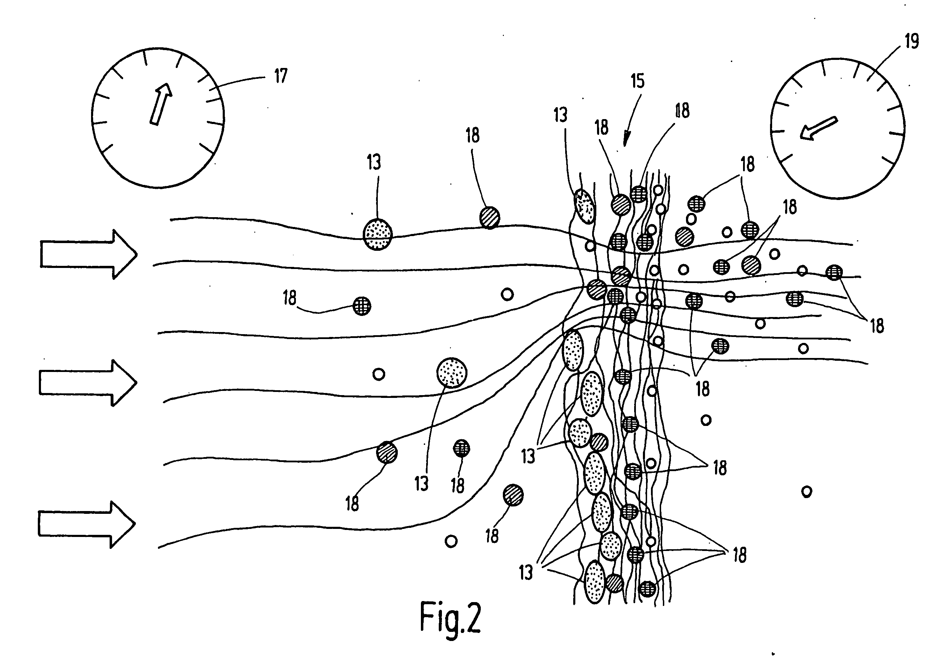

Fig. 2 verdeutlicht schematisiert die Verhältnisse an einem Filterelement für Tiefenfiltration, das von einem durch Fettpartikel 13 oder organische Kolloide belasteten Öl durchströmt wird, wobei vor dem Filtermaterial 15 keine Fangeinrichtung angeordnet ist. Wie ersichtlich, kommt es zu einer Anlagerung von Fettpartikeln 13, wodurch die Durchlässigkeit des Filtermaterials 15 vermindert wird. Wie durch mit 17 und mit 19 bezeichnete, schematisiert angedeutete Druckmesser verdeutlicht ist, kommt es dadurch zu einem starken Anstieg des Differenzdruckes. Dies hat zur Folge, dass es an örtlichen Stellen höherer Durchlässigkeit zu einer örtlich hohen Strömungsgeschwindigkeit kommt, wodurch zuvor bereits im Filtermaterial 15 angelagerte Fettpartikel und organische Kolloide 13, die zu einer scheinbaren Verschlechterung des Ölzustandes beitragen, aus dem Filtermaterial 15 herausgerissen werden und ins System gelangen, so dass sich bei einem solchen Betriebszustand stromabwärts des Filtermaterials 15 eine höhere Zähl rate als vor dem Filtermaterial 15 ergeben kann.

Dies bedeutet, dass eine Beurteilung des Fluidzustandes, wenn sie auf der Basis eines Partikelzählers vorgenommen wird, keine realistische Beurteilung des Ölzustandes gewährleistet, weil in dem Falle, dass die Partikelzählung stromaufwärts des Filtermaterials 15 vorgenommen wird, die für die Zustandsbeurteilung nicht relevanten Fettpartikel oder organischen Kolloide 15 mitgezählt würden, oder, bei stromabwärts vorgenommener Partikelzählung, eine höhere Partikelanzahl gezählt werden kann, als sie vor dem Filtermaterial 15 tatsächlich gegeben ist. Als Störfaktor kommt hinzu, dass das Zusetzen des Filtermaterials 15 mit Fettpartikeln oder organischen Kolloiden 13 zu einer drastischen Erhöhung des Differenzdruckes und zu einer Systemgefährdung und/oder zur Notwendigkeit des Filterwechsels führt.

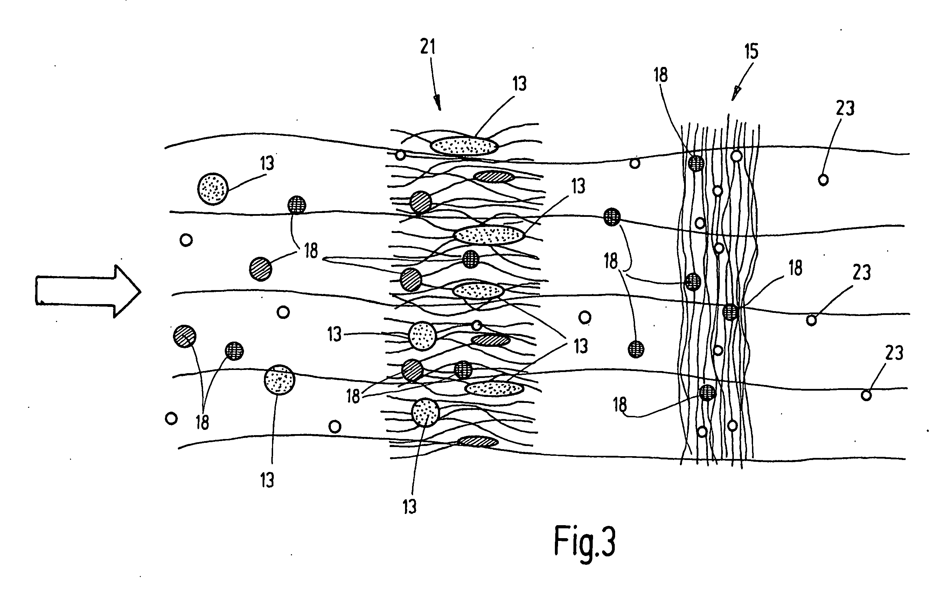

Fig. 3 verdeutlicht die Verhältnisse bei Vorhandensein einer Fangeinrichtung 21, die dem Filtermaterial 15 vorgeschaltet ist. Dank der Großporigkeit des Vliesmaterials der Fangeinrichtung 21 kommt es zwar zur Anlagerung der Fettpartikel und organischen Kolloiden 13, jedoch nicht zu einem Anstieg des Differenzdruckes oder einer örtlichen Erhöhung der Strömungsgeschwindigkeit. Zum Filtermaterial 15 gelangen daher lediglich die das grobporige Material der Fangeinrichtung 21 passierenden Schmutzpartikel 18, so dass das Filtermaterial 15 die Abreinigung im normalen Filtrationsbetrieb durchführt, wodurch wiederum stromabwärts des Filtermaterials 15 lediglich eine geringe Anzahl verbleibender Feinpartikel 23 gezählt und zur Klassifizierung des Ölzustandes in Rechnung gesetzt wird.

Fig. 4 zeigt ein Ausführungsbeispiel der Filtereinrichtung, bei dem der mit einem längs verlaufenden Mantelverschluß 25 geschlossene Fangmantel 7 mit einem oberen Festlegeelement 27 am oberen Deckelteil 11 des Filterelementes und mit einem unteren Festlegeelement 29 am nicht gezeigten unteren Deckelteil des Filterelementes festgelegt ist. Beim vorliegenden Beispiel ist der Mantelverschluß 25 durch ein Haftverschlußelement gebildet, bei dem ein Trägerstreifen auf einer Seite vorstehende Verhakungselemente aufweist, die unmittelbar mit der Faserstruktur des Vlieses in Verhakungseingriff kommen, so dass der Mantel 7 auf einfache Weise dadurch geschlossen werden kann, dass die längs verlaufenden Enden aneinandergelegt werden und der Streifen des Verschlusses 25 über die Stoßstelle gelegt wird um den Verhakungseingriff zu bewirken.

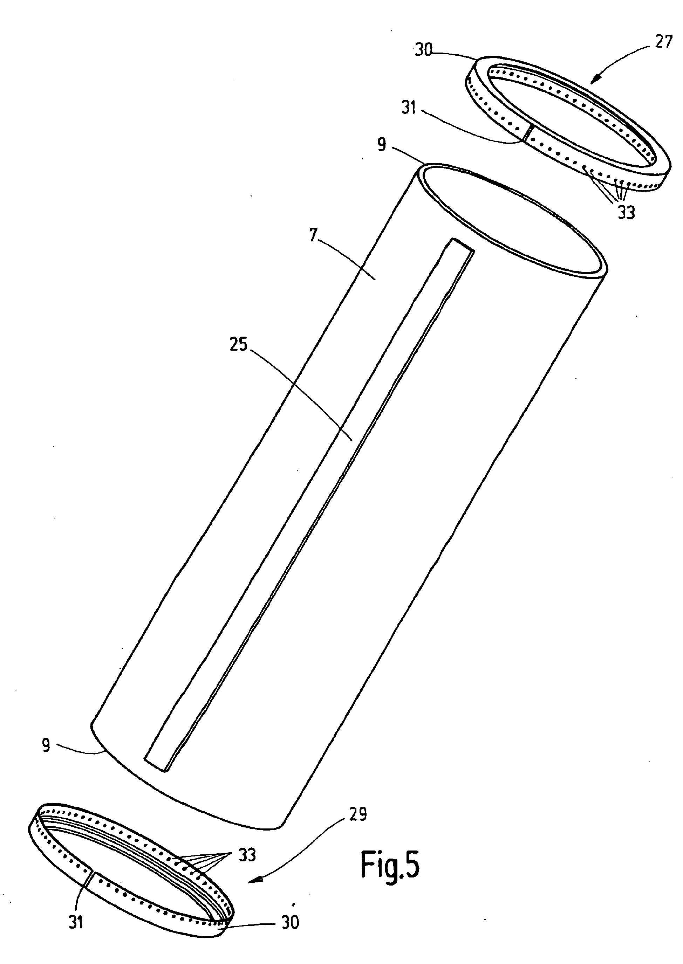

Die Fig. 5 bis 9 verdeutlichen einige aus einer Vielzahl möglicher Bauweisen für Festlegeelemente 27 und 29, die als Einfassung der Endränder 9 des Mantels 7 an diesen Endrändern 9 anbringbar sind und ihrerseits an den Deckelelementen 11 des Filterelementes 1 festlegbar sind.

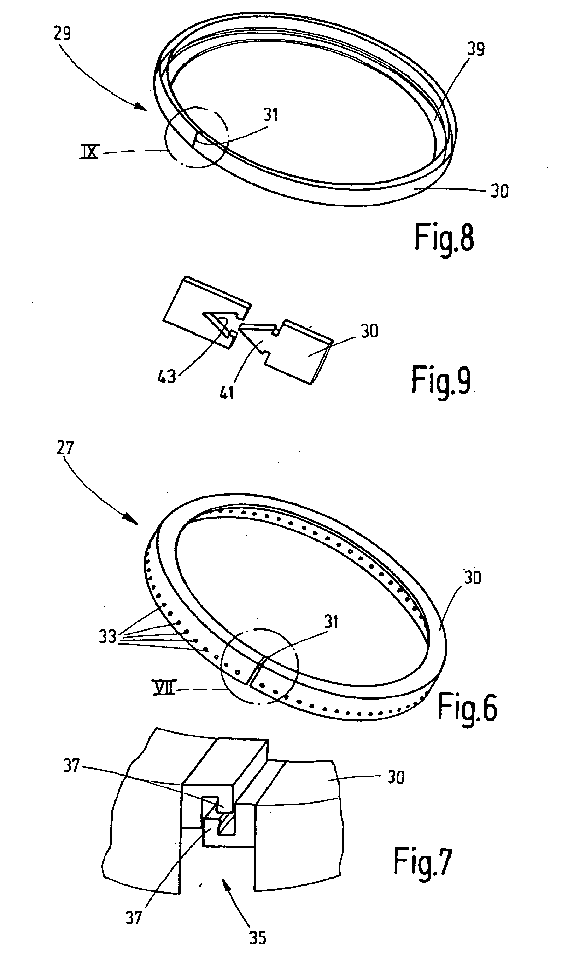

Fig. 5 und 6 zeigen, dass die Festlegeelemente 27 und 29 offene, d. h. eine Trennstelle 31 aufweisende Ringkörper sind. Diese bilden aufspreizbare Klemmringe 30 aus Kunststoff, die am betreffenden Deckelteil 11 des Filterelementes 1 festklemmbar sind. Beim Beispiel von Fig. 5 bis 7 weisen diese Klemmringe 30 eine umfängliche Lochung 33 (nur teilweise beziffert) auf, mittels deren diese Ringkörper mit den Endrändern 9 des Mantels 7 verbindbar sind. Durch Aufspreizen der durch Klemmringe 30 gebildeten Festlegeelemente 27, 29 mit angebrachter Filtermaterialbahn des Mantels 7 und bei geöffnetem Mantelverschluss 25 läßt sich die Einheit aus Klemmringen 30 und Mantel 7 über das Filterelement schieben, bis die Position erreicht ist, in der die Klemmringe 30 die Deckelteile 11 klemmen. Der Mantel 7 bildet somit eine vollflächige Bedeckung der bedruckten Außenhülse 5 an der den Zuströmbereich bildenden Außenseite des Filterelementes 1.

Fig. 7 zeigt, dass der Klemmring 30 an der Trennstelle 31 nicht nur durch seine Elastizitätskraft geschlossen gehalten wird, sondern dass, was in entsprechender Weise auch beim unteren Klemmring 30 der Fall ist, an der Trennstelle 31 eine formschlüssige Verriegelungseinrichtung 35 vorhanden ist, die Verriegelungskörper 37 aufweist, die in Verhakungseingriff miteinander bringbar sind, wobei diese letzteren so geformt sind, dass eine Schnappverbindung im verriegelten Zustand zustande kommt.

Fig. 8 und 9 zeigen ein abgewandeltes Beispiel des unteren Klemmringes 30. Dieser ist, in entsprechender Weise wie dies auch beim oberen Klemmring der Fall ist, für eine Verklebung des Endrandes 9 aus Fig. 5 des Mantels 7 vorgesehen, wenn der Endrand 9 in eine innere Ringnut 39 des Klemmringes 30 eingesteckt ist. Entsprechendes ist auch beim anderen Klemmring so vorgesehen. Dieses Ausführungsbeispiel von Fig. 8 unterscheidet sich gegenüber Fig. 5 bis 7 auch insofern, als an der Trennstelle 31 eine formschlüssige Verhakung der Ringenden vorgesehen ist, wobei der Verhakungseingriff durch in Umfangsrichtung des Ringes erfolgendes Einschieben eines Verhakungskörpers 41 am einen Ringende in eine Ausnehmung 43 am anderen Ringende zustande kommt.

Es versteht sich, dass anstelle der oben beschriebenen Gestaltung der Festlegeeinrichtung für den Fangmantel 7 mit Festlegeelementen 27 und 29, die durch elastische Klemmringe 30 gebildet sind, verschiedene andere Bauweisen in Frage kommen. Anstelle der Benutzung von Klemmringen 30 könnte so vorgegangen werden, dass die Endränder 9 des Fangmantels 7 um die Umfangsflächen der Deckelteile 11 herum gelegt werden und dort mittels eines Ringes aus elastomerem Material, beispielsweise einen Gummibandring, gehalten sind.

Weiterhin könnte anstelle des oben gezeigten Mantelverschlusses 25 in Form eines über die Stoßstelle der Filtermaterialbahn aufgelegten Haftverschlußstreifens auch so vorgegangen werden, dass die Filtermaterialbahn so bemessen ist, dass sich die Enden, wenn die Filtermaterialbahn um das Filterelement 1 herum gelegt ist, überlappen, wobei im Überlappungsbereich ein Haftverschluß mit innenliegender Verhakung ausgebildet ist.

Eine alternative Verbindungstechnik stellt die Herstellung eines zylindrischen Vlieskörpers mit an den Enden verschweißter Überlappung dar, der koaxial auf den perforierten Außenmantel aufgezogen und mit diesem wiederum im Bereich der offenen Enden lose aufliegt oder dicht verschweißt ist.

## Patentansprüche

1. Filtereinrichtung für Fluide, insbesondere Hydraulikflüssigkeiten, Schmieröle oder Kraftstoffe,
- mit mindestens einem einen Zuströmbereich (5) für abzureinigendes Fluid aufweisenden Filterelement (1),
- und mit einem am Filterelement (1) anbringbaren, den Zuströmbereich (5) überdeckenden, eine Fangeinrichtung für organische Substanzen wie Fettpartikel und/oder unvollständig gelöste organische Substanzen bildenden Vorsatzelement (7),
- wobei das Filterelement (1) ein eine Längsachse (3) definierender Körper ist, dessen die Längsachse (3) umgebende Außenfläche (5) den Zuströmbereich bildet,
- und wobei das Vorsatzelement die Form eines diese Außenfläche (5) bedeckenden Fangmantels (7) besitzt,
- **dadurch gekennzeichnet, dass** am Filterelement (1) an seinen in Längsrichtung zueinander entgegengesetzten Enden je ein die Enden des Zuströmbereiches (5) bildendes Deckelelement (11) vorgesehen ist,
- dass mindestens eine Festlegevorrichtung (27, 29) vorgesehen ist, um einen betreffenden Endrand (9) des Fangmantels (7) am betreffenden Deckelelement (11) festzulegen, und
- dass die mindestens eine Festlegevorrichtung (27, 29) als am betreffenden Deckelelement (11) festklemmbarer Ringkörper (30) ausgebildet ist.

2. Filtereinrichtung nach Anspruch 1, **dadurch gekennzeichnet, dass** mindestens ein Ringkörper (30) eine Trennstelle (31) aufweist, an der Ringenden miteinander verbindbar sind.

3. Filtereinrichtung nach Anspruch 2, **dadurch gekennzeichnet, dass** an der Trennstelle (31) eine formschlüssige Verriegelungseinrichtung (35) vorhanden ist, deren Verriegelungskörper (37) in Verhakungseingriff miteinander bringbar sind.

4. Filtereinrichtung nach Anspruch 2, **dadurch gekennzeichnet, dass** an der Trennstelle (31) eine formschlüssige Verhakung der Ringenden vorgesehen ist, wobei der Verhakungseingriff durch Einschieben eines Verhakungskörpers (41) am einen Ringende in eine Ausnehmung (43) am anderen Ringende zustandekommt.

5. Filtereinrichtung nach einem der vorhergehenden Ansprüche, **dadurch gekennzeichnet, dass** mindestens ein Ringkörper (30) als elastischer und/oder aufspreizbarer Klemmring (30) ausgebildet ist.

6. Filtereinrichtung nach einem der vorhergehenden Ansprüche, **dadurch gekennzeichnet, dass** mindestens ein Ringkörper (30) eine umfängliche Lochung (33) zur Verbindung mit den Endrändern (9) des Mantels (7) aufweist.

7. Filtereinrichtung nach einem der vorhergehenden Ansprüche, **dadurch gekennzeichnet, dass** mindestens ein Ringkörper (30) eine innere Ringnut (39) zur Verklebung mit den Endrändern (9) des Mantels (7) aufweist.

8. Filtereinrichtung nach einem der vorhergehenden Ansprüche, **dadurch gekennzeichnet, dass** zwei jeweils einem Deckelement (11) zugeordnete Ringkörper (30) vorgesehen sind.

9. Filtereinrichtung nach einem der vorhergehenden Ansprüche, **dadurch gekennzeichnet, dass** der Mantel (7) aus einer Filtermaterialbahn (21) gebildet ist, deren einander entgegengesetzte Enden zur Bildung der Mantelform zusammenbringbar und über einen längs verlaufenden Mantelverschluss (25) miteinander verbindbar sind.

10. Filtereinrichtung nach einem der vorhergehenden Ansprüche, **dadurch gekennzeichnet, dass** die Außenfläche (5) des Filterelementes (1) kreiszylindrisch und der Fangmantel (7) hohlzylinderförmig ist.

11. Filtereinrichtung nach Anspruch 9 oder 10, **dadurch gekennzeichnet, dass** der Mantelverschluss (25) durch eine Haftverbindung gebildet ist.

12. Filtereinrichtung nach einem der vorhergehenden Ansprüche, **dadurch gekennzeichnet, dass** zur Bildung der Fangeinrichtung ein Vlies (21) grober Porenstruktur vorgesehen ist, das am zugeordneten Filterelement (1) als dessen Zuströmbereich (5) bedeckende Vorfilterstufe anbringbar ist.

13. Filtereinrichtung nach Anspruch 12, **dadurch gekennzeichnet, dass** das Vlies (21) eine Filtermaterialbahn bildet, deren einander entgegengesetzte Enden zur Bildung eines hohlzylindrischen Mantels (7) zusammenbringbar und durch eine Verschlußeinrichtung (25) verbindbar sind.

14. Filtereinrichtung nach Anspruch 13, **dadurch gekennzeichnet, dass** die Verschlußeinrichtung (25) einen Haftverschluß aufweist.

15. Filtereinrichtung nach einem der Ansprüche 12 bis 14, **dadurch gekennzeichnet, dass** ein Vlies (21) aus lipophilem Material vorgesehen ist, insbesondere aus Fasern aus Polyolefin oder aus Polyester mit Co-Polyester oder anderen unpolaren organischen Materialien.

16. Filtereinrichtung nach einem der Ansprüche 13 bis 15, **dadurch gekennzeichnet, dass** die aus dem Vlies (21) gebildete Filtermaterialbahn eine vernetzte, voluminöse Faserstruktur mit einer gröberen Feinheit als diejenige des nachgeschalteten Filterelemehtes besitzt.

## Claims

1. A filter device for fluids, in particular hydraulic liquids, lubricating oils or fuels
- comprising at least one filter element (1) which has an inflow region (5) for fluid to be cleaned,
- and comprising an attachment element (7) attachable to the filter element (1), covering the inflow region (5), forming a trap device for organic substances such as grease particles and/or incompletely dissolved organic substances,
- the filter element (1) being a body defining a longitudinal axis (3), the outer surface (5) of which surrounding the longitudinal axis (3) forms the inflow region,
- and the attachment element being in the form of a trap jacket (7) covering this outer surface (5),
- **characterised in that** on the filter element (1), on its ends opposite one another in the longitudinal direction, a respective covering element (11) forming the ends of the inflow region (5) is provided,
- that at least one fixing apparatus (27, 29) is provided in order to fix a respective end edge (9) of the trap jacket (7) onto the respective cover element (11), and
- that the at least one fixing apparatus (27, 29) is in the form of a annular body (30) that can be clamped securely onto the respective cover element (11).

2. The filter device according to Claim 1, **characterised in that** at least one annular body (30) has a separation site (31) at which ring ends can be connected to one another.

3. The filter device according to Claim 2, **characterised in that** at the separation site (31) there is a positive locking device (35) the locking bodies (37) of which can be caused to engage with one another by interlocking.

4. The filter device according to Claim 2, **characterised in that** at the separation site (31) there is positive interlocking of the ring ends, the engagement by interlocking taking place by insertion of an interlocking body (41) on one ring end into a recess (43) on the other ring end.

5. The filter device according to any of the preceding claims, **characterised in that** at least one annular body (30) is formed as an elastic and/or spreadable clamp ring (30).

6. The filter device according to any of the preceding claims, **characterised in that** at least one annular body (30) has peripheral perforations (33) for connection to the end edges (9) of the jacket (7).

7. The filter device according to any of the preceding claims, **characterised in that** at least one annular body (30) has an inner annular groove (39) for adhering to the end edges (9) of the jacket (7).

8. The filter device according to any of the preceding claims, **characterised in that** two annular bodies (30) respectively assigned to a cover element (11) are provided.

9. The filter device according to any of the preceding claims, **characterised in that** the jacket (7) is formed from a web (21) of filter material, the opposite ends of which can be brought together to form the jacket shape and can be connected to one another via a longitudinally extending jacket closure (25).

10. The filter device according to any of the preceding claims, **characterised in that** the outer surface (5) of the filter element (1) is circularly cylindrical and the trap jacket (7) has the shape of a hollow cylinder.

11. The filter device according to Claim 9 or 10, **characterised in that** the jacket closure (25) is formed by an adhesive connection.

12. The filter device according to any of the preceding claims, **characterised in that** in order to form the trap device there is a non-woven material (21) with a coarse pore structure which can be attached to the assigned filter element (1) as the pre-filter stage covering the inflow region (5) of the latter.

13. The filter device according to Claim 12, **characterised in that** the non-woven material (21) forms a web of filter material, the opposing ends of which can be brought together to form a hollow cylindrical jacket (7) and can be connected by a closure device (25).

14. The filter device according to Claim 2, **characterised in that** the closure device (25) has an adhesive closure.

15. The filter device according to any of Claims 12 to 14, **characterised in that** there is a non-woven material (21) made of lipophilic material, in particular fibres of polyolefin or polyester with co-polyester or other non-polar organic materials.

16. The filter device according to any of Claims 13 to 15, **characterised in that** the web of filter material formed from the non-woven material (21) has a cross-linked, voluminous fibre structure with a coarser fineness than that of the downstream filter element.

## Revendications

1. Dispositif de filtration de fluides, notamment de liquides hydrauliques, d'huiles de lubrification ou de carburants,
- comprenant au moins un élément (1) filtrant ayant une zone (5) d'afflux du fluide à épurer,
- et comprenant un élément (7) placé devant, qui peut être mis sur l'élément (1) filtrant, qui recouvre la zone (5) d'afflux et qui forme un dispositif de capture de substances organiques, comme des particules de graisses et/ou des substances organiques incomplètement dissoutes,
- dans lequel l'élément (1) filtrant est une pièce définissant un axe (3) longitudinal, dont la surface (5) extérieure entourant l'axe (3) longitudinal forme la zone d'afflux,
- et dans lequel l'élément placé devant a la forme d'une enveloppe (7) de capture recouvrant cette surface (5) extérieure,
- **caractérisé en ce qu'**il est prévu sur l'élément (1) filtrant, à ses extrémités opposées l'une à l'autre dans la direction longitudinale, respectivement un élément (11) de couvercle formant les extrémités de la zone (5) d'afflux,
- **en ce qu'**il est prévu au moins un dispositif (27, 29) de fixation, pour fixer un bord (9) d'extrémité concerné de l'enveloppe (7) de capture à l'élément (11) de couvercle concerné, et
- **en ce que** le au moins un dispositif (27, 29) de fixation est constitué sous la forme d'une pièce (30) annulaire pouvant être bloquée sur l'élément (11) de couvercle concerné.

2. Dispositif de filtration suivant la revendication 1, **caractérisé en ce que** la au moins une pièce (30) annulaire a un point (31) de séparation où les extrémités de l'anneau peuvent être reliées l'une à l'autre.

3. Dispositif de filtration suivant la revendication 2, **caractérisé en ce qu'**il est prévu au point (31) de séparation un dispositif (31) de verrouillage à complémentarité de forme, dont les pièces (37) de verrouillage peuvent être accrochées l'une à l'autre.

4. Dispositif de filtration suivant la revendication 2, **caractérisé en ce qu'**il est prévu au point (31) de séparation un accrochage à complémentarité de forme des extrémités de l'anneau, l'accrochage étant produit par pénétration d'une pièce (41) d'accrochage à une extrémité de l'anneau dans un évidement (43) à l'autre extrémité de l'anneau.

5. Dispositif de filtration suivant l'une des revendications précédentes, **caractérisé en ce qu'**au moins une pièce (30) annulaire est constituée sous la forme d'un anneau de serrage élastique et/ou pouvant s'écarter.

6. Dispositif de filtration suivant l'une des revendications précédentes, **caractérisé en ce qu'**au moins une pièce (30) annulaire a une perforation (33) de liaison avec les bords (9) d'extrémité de l'enveloppe (7).

7. Dispositif de filtration suivant l'une des revendications précédentes, **caractérisé en ce qu'**au moins une pièce (30) annulaire a une rainure (39) annulaire intérieure de collage avec les bords (9) d'extrémité de l'enveloppe (7).

8. Dispositif de filtration suivant l'une des revendications précédentes, **caractérisé en ce qu'**il est prévu deux pièces (30) annulaires associées respectivement à un élément (11) de couvercle.

9. Dispositif de filtration suivant l'une des revendications précédentes, **caractérisé en ce que** l'enveloppe (7) est en une bande (21) de matière filtrante, dont les extrémités opposées l'une à l'autre peuvent être réunies pour la formation de la forme en enveloppe et peuvent être reliées l'une à l'autre par une fermeture (25) d'enveloppe s'étendant longitudinalement.

10. Dispositif de filtration suivant l'une des revendications précédentes, **caractérisé en ce que** la surface (5) extérieure de l'élément (1) filtrant est cylindrique de section transversale circulaire et l'enveloppe (7) de capture est en forme de cylindre creux.

11. Dispositif de filtration suivant la revendication 9 ou 10, **caractérisé en ce que** la fermeture (25) de l'enveloppe est formée par une liaison autoagrippante.

12. Dispositif de filtration suivant l'une des revendications précédentes, **caractérisé en ce qu'**il est prévu, pour la formation du dispositif de capture, un non tissé (11) à structure de pores grossière, qui peut être mis sur l'élément (1) filtrant associé en tant qu'étage de pré-filtration recouvrant sa zone (5) d'accès.

13. Dispositif de filtration suivant la revendication 12, **caractérisé en ce que** le non tissé (21) forme une bande de matière filtrante, dont les extrémités opposées l'une à l'autre peuvent être rassemblées pour la formation d'une enveloppe (7) cylindrique creuse et être reliées par un dispositif (25) de fermeture.

14. Dispositif de filtration suivant la revendication 13, **caractérisé en ce que** le dispositif (25) de fermeture comporte une fermeture autoagrippante.

15. Dispositif de filtration suivant l'une des revendications 12 à 14, **caractérisé en ce qu'**il est prévu un non tissé (21) en matière lipophile, notamment en fibres de polyoléfine ou de polyester avec un copolyester ou d'autres substances organiques non polaires.

16. Dispositif de filtration suivant l'une des revendications 13 à 15, **caractérisé en ce que** la bande de matière filtrante formée par le non tissé (21) a une structure fibreuse réticulée volumineuse, ayant une finesse plus grossière que celle de l'élément filtrant en aval.
